# EUROPEAN PATENT APPLICATION

(11) **EP 4 757 012 A2**
(43) Date of publication of application: **10.06.2026**
(21) Application number: 26175631.6
(22) Date of filing: 30.04.2026
(51) Int. Cl.: H01M 50/103, H01M 50/15, H01M 50/184, H01M 50/186, H01M 50/528, H01M 50/531, H01M 50/55, H01M 50/586, H01M 50/588, H01M 50/593

(54) **BATTERY AND ELECTRONIC DEVICE**

(30) Priority: 27.06.2025 CN 202510886323
(71) Applicant: Zhuhai Cosmx Power Co., Ltd., Zhuhai, Guangdong 519180 (CN)
(72) Inventor: HUANG, Zengke, Zhuhai, 519180 (CN)
(74) Representative: Elzaburu S.L.P.

(57) **Abstract**

The present invention discloses a battery and an electronic device, relating to the technical field of energy storage devices. The battery includes a cell, a protective plate and a sealant part, where the cell includes a housing, an electrode assembly, and a tab extending from the electrode assembly; the protective plate includes a protective plate main body and a connection terminal, the protective plate main body being located on a side of a first main body portion facing away from a top end face and electrically connected to the tab; the protective plate main body is parallel to a top end face of the cell; the sealant part is located at a periphery of the protective plate main body; at least one side of the protective plate in a direction of width has an exposed portion exposed outside the sealant part; and a first insulation member covers at least the exposed portion. In the present application, a surface of the protective plate main body exposed outside the sealant part is provided with the first insulation member that covers the exposed portion of the protective plate main body exposed outside the sealant part, which can avoid direct exposure of the exposed portion of the protective plate main body exposed outside the sealant part, and in turn eliminate a potential safety risk caused by exposure of the protective plate main body outside the sealant part.

## Description

### TECHNICAL FIELD

The present invention relates to the technical field of energy storage devices, and in particular to a battery and an electronic device.

### BACKGROUND

With the development of cell energy density, insulation protection of a battery is generally achieved by means of potting at a cap of the battery. At present, the growing demand for higher battery charging efficiency leads to an increase of the width of a protective plate, while the demand for miniaturization of an electronic device results in a decrease of the thickness of the cell.

In view of the increase of the width of the protective plate and the decrease of the thickness of the cell, the insulation protection achieved by completely covering the protective plate by means of potting at the cap results in further increase of the width of the protective plate covered by sealant, so that the thickness of the cap of the battery may be greater than the thickness of the cell, affecting the space utilization of the battery; and simply reducing the amount of sealant may pose a safety risk to the protective plate.

In summary, how to provide a battery that can avoid increase of the thickness of the battery due to potting and also eliminate the potential safety risk of the protective plate is a problem that urgently needs to be solved by those skilled in the art.

### SUMMARY

In view of this, an objective of the present invention is to provide a battery in which, when a protective plate main body is partially exposed outside a sealant part, a first insulation member is bonded to a surface of the protective plate main body exposed outside the sealant part, thereby avoiding a potential safety risk caused by exposure of the protective plate main body outside the sealant part.

Another objective of the present invention is to provide an electronic device including the battery described above.

In order to achieve the above objectives, the present invention provides the following technical solutions:
a battery, including:
a cell including a housing, an electrode assembly located within the housing, and a tab electrically connected to the electrode assembly, where the housing has a top sealing edge and a side sealing edge formed at an edge of the electrode assembly; the tab extends out of the cell from the top sealing edge, the top sealing edge includes a first main body portion and a first extension, and the side sealing edge includes a second main body portion and a second extension; the first main body portion is bent toward a top end face of the cell, and the second main body portion is bent toward a side surface of the cell; and in a direction of height of the electrode assembly, the second extension extends out of a top end face of the electrode assembly and extends in the direction of height of the electrode assembly, and the first extension connects the second extension and the first main body portion;
a protective plate including a protective plate main body and a connection terminal electrically connected to the protective plate main body, the protective plate main body being arranged on a side of the first main body portion facing away from the top end face and electrically connected to the tab, the protective plate main body being parallel to the top end face of the cell, and the top end face of the cell being an end face of the cell in a direction of height;
a sealant part located at a periphery of the protective plate main body; at least one side of the protective plate main body in a direction of width having an exposed portion exposed outside the sealant part; and
a first insulation member covering at least the exposed portion.

Optionally, in the direction of width of the protective plate main body, the housing is provided with a deep recessed face on one side, and the housing is provided with a shallow recessed face on the other side; a side of the protective plate main body in the same direction as the deep recessed face of the housing is completely located within the sealant part, and a side of the protective plate main body in the same direction as the shallow recessed face of the housing is partially exposed outside the sealant part; and
the first main body portion is bent from the shallow recessed face toward the deep recessed face.

Optionally, the first insulation member includes a first insulation face, the first insulation face being located on a surface of the protective plate main body exposed outside the sealant part, or the first insulation face being located on a surface of the protective plate main body exposed outside the sealant part and on a surface of the sealant part on the same side;
and/or the first insulation member includes a second insulation face, an upper surface of the protective plate main body being completely located within the sealant part, and the second insulation face being located on a surface of the sealant part on the same side as the upper surface of the protective plate main body;
and/or the first insulation member includes a third insulation face, a surface of the tab exposed outside the sealant part being located on the same side as a second side face of the protective plate main body in the direction of width, and the third insulation face being located on a surface of the tab exposed outside the sealant part, or the third insulation face being located on a surface of the tab exposed outside the sealant part and on a surface of the sealant part on the same side.

Optionally, the protective plate main body is provided with a notch, a position of the notch corresponding to a connection position of the tab on the protective plate main body, an opening of the notch being located at an edge of a side of the protective plate main body in the direction of width, and a direction of depth of the notch extending in the direction of width of the protective plate main body; and the direction of depth of the notch is a direction from the opening of the notch toward a bottom face of the notch.

Optionally, in the direction of width of the protective plate main body, a side of the protective plate main body having the notch is the same side as a side of the protective plate main body exposed outside the sealant part.

Optionally, the second extension is at least partially exposed outside the sealant part; and
the battery further includes a second insulation member, the second insulation member being located on a surface of the second extension exposed outside the sealant part;
or the second insulation member being located on a surface of the second extension exposed outside the sealant part and on a surface of the sealant part on the same side as the second extension.

Optionally, the first extension is at least partially exposed outside the sealant part; and
the second insulation member includes a fifth insulation face and a sixth insulation face;
where the fifth insulation face is located on the surface of the second extension exposed outside the sealant part, and the sixth insulation face is located on the surface of the first extension exposed outside the sealant part;
or the fifth insulation face is located on the surface of the second extension exposed outside the sealant part and on the surface of the sealant part on the same side; and the sixth insulation face is located on the surface of the first extension exposed outside the sealant part and on the surface of the sealant part on the same side.

Optionally, an angle between an extension direction of the second extension and a direction of height of the cell is 2° to 18°; and the second extension is completely located within the sealant part.

Optionally, the connection terminal includes two flexible printed circuit boards, and a spacing between two adjacent flexible printed circuit boards is greater than or equal to 1.2 mm;
or the connection terminal includes at least one flexible printed circuit board, and a surface of the sealant part facing away from the cell is provided with a groove and a double-sided adhesive foam tape located within the groove, one side of the double-sided adhesive foam tape being bonded to a surface of the second insulation face away from the protective plate main body, and the other side of the double-sided adhesive foam tape being bonded to the flexible printed circuit board.

Optionally, a thickness of the double-sided adhesive foam tape is less than a depth of the groove minus 0.1 mm; in a direction of thickness of the cell, two side edges of the double-sided adhesive foam tape are recessed inward by 0.1 mm to 2.0 mm relative to an edge of the sealant part; and in a direction of width of the cell, a side edge of the double-sided adhesive foam tape away from the flexible printed circuit board protrudes away from the flexible printed circuit board by 0.5 mm to 5 mm relative to an edge of the flexible printed circuit board.

An electronic device includes the battery of any one of the above aspects.

The battery provided by the present invention includes a cell, a protective plate and a sealant part, where the cell includes a housing, an electrode assembly located within the housing, and a tab extending from the electrode assembly; the housing has a top sealing edge and a side sealing edge formed at an edge of the electrode assembly; the tab extends out of the cell from the top sealing edge; the top sealing edge includes a first main body portion and a first extension, and the side sealing edge includes a second main body portion and a second extension; the first main body portion is bent toward a top end face of the cell, and the second main body portion is bent toward a side surface of the cell; in a direction of height of the electrode assembly, the second extension extends out of a top end face of the electrode assembly and extends in the direction of height of the electrode assembly, and the first extension connects the second extension and the first main body portion; the housing covers a periphery of the electrode assembly; the protective plate includes a protective plate main body and a connection terminal electrically connected to the protective plate main body, the protective plate main body being arranged on a side of the first main body portion facing away from the top end face and electrically connected to the tab, the protective plate main body being parallel to the top end face of the cell, and the top end face of the cell being an end face of the cell in a direction of height; the sealant part is located at a periphery of the protective plate main body; at least one side of the protective plate main body in a direction of width is provided with an exposed portion exposed outside the sealant part; and a first insulation member covers at least the exposed portion.

The battery provided by the present application includes the following beneficial effects.
(1) In the present application, at least one side of the protective plate main body in the direction of width is exposed outside the sealant part, which is suitable for the case where the cell is required to be thin and the protective plate main body is required to be wide, and can thus better meet the requirements for light weight and fast charging.
(2) In the present application, the surface of the protective plate main body exposed outside the sealant part is provided with the first insulation member that covers the exposed portion of the protective plate main body exposed outside the sealant part, which can prevent direct exposure of the exposed portion of the protective plate main body exposed outside the sealant part, and in turn eliminate a potential safety risk caused by exposure of the protective plate main body outside the sealant part.

### BRIEF DESCRIPTION OF DRAWINGS

To describe technical solutions in embodiments of the present invention or in the prior art more clearly, the following briefly describes the drawings needed for describing the embodiments or the prior art. It is clear that the drawings in the following descriptions are merely part of embodiments of the present invention, and a person of ordinary skill in the art may still derive other drawings from the provided drawings without creative efforts.
FIG. 1 is a schematic structural diagram of a battery according to the present invention, with a housing being unfolded.
FIG. 2 is a schematic structural diagram of a specific embodiment of the battery according to the present invention.
FIG. 3 is a schematic cross-sectional view of a placement position in a protective plate main body in a front-view direction.
FIG. 4 is a schematic top view of the protective plate main body.
FIG. 5 is a schematic cross-sectional view of a protective plate in the battery according to the present invention in the front-view direction.
FIG. 6 is a schematic diagram showing a position of a notch of the protective plate main body in the battery according to the present invention.
FIG. 7 is a schematic cross-sectional view of a relative positional relationship between the protective plate main body and a sealant part in the battery according to the present invention in a side-view direction.
FIG. 8 is a schematic structural diagram of a positional relationship between a side sealing edge, a top sealing edge and the sealant part in the battery according to the present invention in the front-view direction.
FIG. 9 is a schematic structural diagram of a positional relationship between the side sealing edge, the top sealing edge and the sealant part in the battery according to the present invention in the side-view direction.
FIG. 10 is a schematic diagram showing attachment positions of a first insulation member and a second insulation member in the battery according to the present invention.
FIG. 11 is a schematic cross-sectional view showing the oblique arrangement of a second extension of a housing in the battery according to the present invention.
FIG. 12 is a partial enlarged view of part A in FIG. 10.
FIG. 13 is a schematic structural diagram of the battery in FIG. 10 after potting.
FIG. 14 is a schematic structural diagram of a battery according to the present invention provided with two flexible printed circuit boards.
FIG. 15 is a schematic diagram showing an arrangement position of a double-sided adhesive foam tape in the battery according to the present invention.

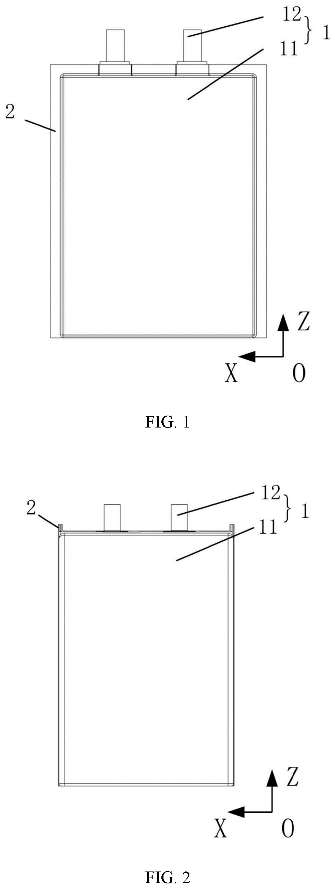

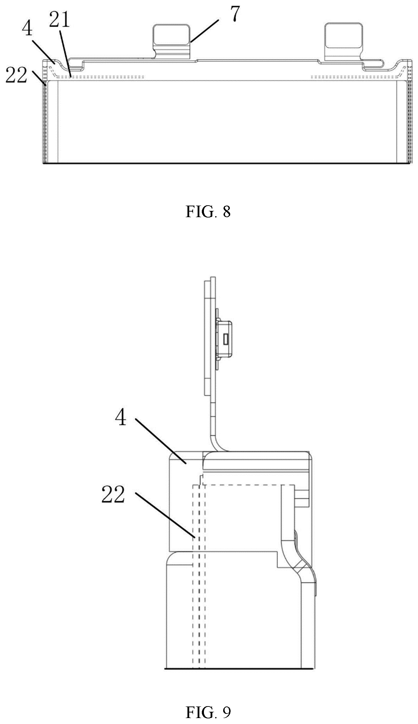

In FIGS. 1 to 15:
1. Cell, 11. Electrode assembly, 12. Tab; 2. Housing, 21. Top sealing edge, 211. First main body portion, 212. First extension, 22. Side sealing edge, 221. Second main body portion, 222. Second extension; 3. Protective plate main body, 31. Notch, 32. First placement face, 33. Second placement face; 4. Sealant part; 5. First insulation member; 6. Second insulation member; 7. Flexible printed circuit board; 8. Double-sided adhesive foam tape, 9. Groove.

### DESCRIPTION OF EMBODIMENTS

Technical solutions in embodiments of the present invention are clearly and completely described below with reference to the drawings in the embodiments of the present invention. Apparently, the embodiments described are merely part rather than all of the embodiments of the present invention. Based on the embodiments in the present invention, all other embodiments obtained by those of ordinary skill in the art without involving creative effort belong to the scope of protection of the present invention.

The core of the present invention is to provide a battery in which, when a protective plate main body is partially exposed outside a sealant part, a first insulation member is bonded to an exposed portion of the protective plate main body exposed outside the sealant part, thereby avoiding a potential safety risk caused by exposure of the protective plate main body outside the sealant part.

Another core of the present invention is to provide an electronic device including the battery described above.

### Embodiment 1

This specific embodiment provides a battery. The battery includes a cell 1, a protective plate and a sealant part 4. The cell 1 includes a housing 2, an electrode assembly 11 located within the housing 2, and a tab 12 extending from the electrode assembly 11. The housing 2 covers a periphery of the electrode assembly 11. The housing 2 has a top sealing edge 21 and a side sealing edge 22 formed at an edge of the electrode assembly 11. The tab 12 extends out of the cell 1 from the top sealing edge 21. The top sealing edge 21 includes a first main body portion 211 and a first extension 212, and the side sealing edge 22 includes a second main body portion 221 and a second extension 222. The first main body portion 211 is bent toward a top end face of the cell 1, and the second main body portion 221 is bent toward a side surface of the cell 1. In a direction of height of the electrode assembly 11, the second extension 222 extends out of a top end face of the electrode assembly 11 and extends in the direction of height of the electrode assembly 11, and the first extension 212 connects the second extension 222 and the first main body portion 211. The protective plate includes a protective plate main body 3 and a connection terminal electrically connected to the protective plate main body 3. The protective plate main body 3 is arranged on a side of the first main body portion 211 facing away from the top end face and electrically connected to the tab 12, and the protective plate main body 3 is parallel to the top end face of the cell 1. The sealant part 4 is located at a periphery of the protective plate main body 3. At least one side of the protective plate main body 3 in a direction of width has an exposed portion exposed outside the sealant part 4. A first insulation member 5 covers at least the exposed portion.

In this specific embodiment, the top end face of the cell 1 is an end face of the cell 1 connected to the tab 12 in the direction of height, and the direction of height of the cell 1 is a direction shown by a Z-axis in FIGS. 1 and 2.

It should be noted that in this specific embodiment, the protective plate main body 3 may be provided as a printed circuit board (PCB), or a PCB and flexible printed circuit board (FPC) combined circuit board, and in this specific embodiment, the connection terminal may be provided as an FPC or other electrical and mechanical connection points that are either pluggable or weldable.

In this specific embodiment, during actual processing, the protective plate main body 3 is generally electrically connected to the tab 12, and a sealant covers a periphery of the protective plate main body 3 by means of potting to form the sealant part 4.

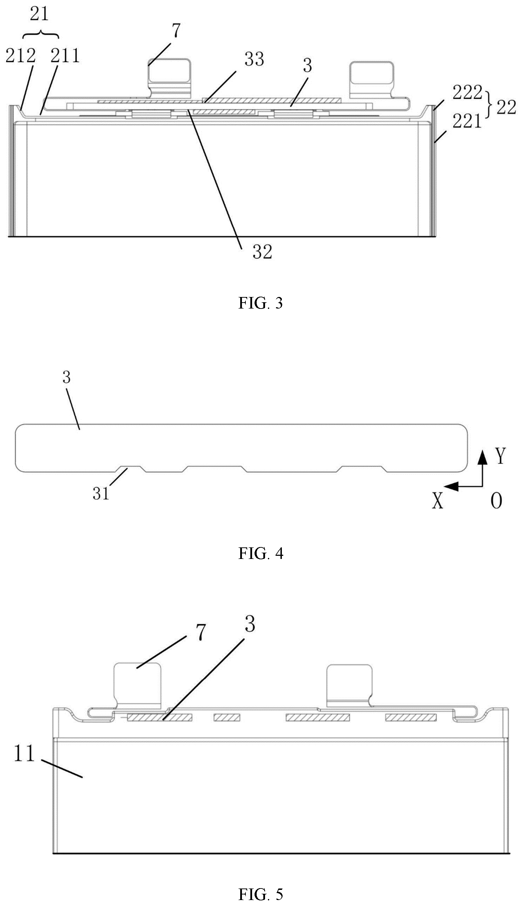

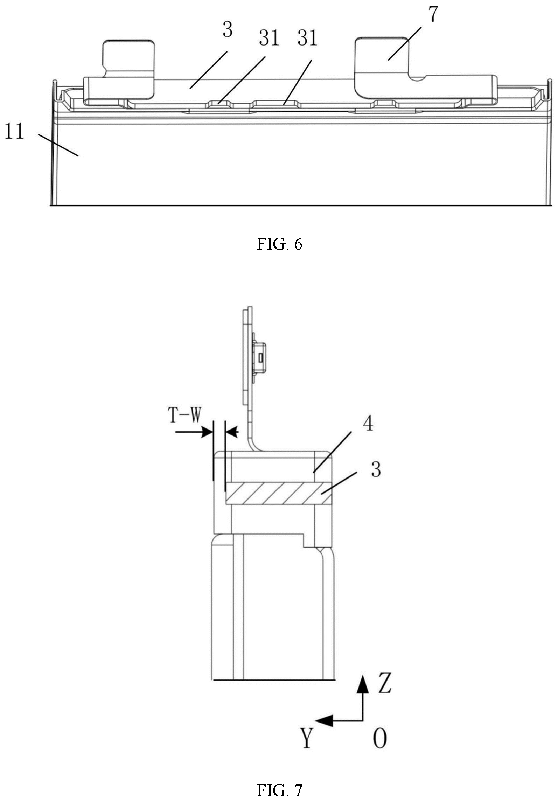

In the present application, the direction of height of the electrode assembly 11 is the direction shown by the Z-axis in FIGS. 1 and 2; and the direction of width of the protective plate main body 3 is a direction shown by a Y-axis in FIG. 4. The direction of height of the cell 1 is the direction shown by the Z-axis in FIGS. 1 and 2. The direction of thickness of the cell 1 is a direction shown by a Y-axis in FIG. 7.

The first insulation member 5 may be provided as an insulation sticker or other thin sheet-like insulation structures that meet the requirements, depending on actual situations.

In this specific embodiment, when the first insulation member 5 is attached to the exposed portion of the protective plate main body 3 exposed outside the sealant part 4, the area of the first insulation member 5 may be made larger than the area of the exposed portion of the protective plate main body 3 exposed outside the sealant part 4, so that the first insulation member 5 completely covers the exposed portion of the protective plate main body 3 exposed outside the sealant part 4. Moreover, a portion of the first insulation member 5 that extends out of the exposed portion of the protective plate main body 3 exposed outside the sealant part 4 may be bonded to a surface of the sealant part 4 on the same side or to a surface of the housing 2 on the same side, so that an edge of the exposed portion of the protective plate main body 3 exposed outside the sealant part 4 may also be effectively covered.

During actual processing, the protective plate main body 3 may have at least two surfaces both exposed outside the sealant part 4. In this case, the first insulation member 5 may be bent to cover the different surfaces of the protective plate main body 3 exposed outside the sealant part 4, and the first insulation member 5 may also adopt a separate design, so that different first insulation members 5 can be attached to the different surfaces of the protective plate main body 3 exposed outside the sealant part 4.

In this specific embodiment, at least one side of the protective plate main body 3 in the direction of width is exposed outside the sealant part 4, which is suitable for the case where the cell 1 is required to be thin and the protective plate main body 3 is required to be wide, and can thus better meet the requirements for light weight and fast charging. In addition, in this specific embodiment, the surface of the protective plate main body 3 exposed outside the sealant part 4 is provided with the first insulation member 5, and the first insulation member 5 covers the exposed portion of the protective plate main body 3 exposed outside the sealant part 4, which can prevent direct exposure of the exposed portion of the protective plate main body 3 exposed outside the sealant part 4, and in turn eliminate a potential safety risk caused by exposure of the protective plate main body 3 outside the sealant part 4.

### Embodiment 2

In this specific embodiment, the first insulation member 5 includes a first insulation face. The first insulation face is located on a surface of the protective plate main body 3 exposed outside the sealant part 4; or the first insulation face is located on a surface of the protective plate main body 3 exposed outside the sealant part 4 and on a surface of the sealant part 4 on the same side.

The surface of the protective plate main body 3 exposed outside the sealant part 4 mentioned herein may be either a side face of the protective plate main body 3 in the direction of width or an upper surface of the protective plate main body 3, depending on actual situations.

When a first side face of the protective plate main body 3 in the direction of width is at least partially exposed outside the sealant part 4, and the upper surface of the protective plate main body 3 is completely located within the sealant part 4, the first insulation member 5 may further include a second insulation face; the first insulation face is connected to the second insulation face, and the first insulation face is located on a surface, exposed outside the sealant part 4, of the first side face of the protective plate main body 3 in the direction of width; or the first insulation face is located on a surface, exposed outside the sealant part 4, of the first side face of the protective plate main body 3 in the direction of width and on a surface of the sealant part 4 on the same side; and the second insulation face is located on a surface of the sealant part 4 on the same side as the upper surface of the protective plate main body 3.

The first side face of the protective plate main body 3 in the direction of width may be: a surface of the side, in the same direction as the shallow recessed face of the housing 2, of the protective plate main body 3 in the direction of width. The second side face of the protective plate main body 3 in the direction of width may be: a surface of the side, in the same direction as the deep recessed face of the housing 2, of the protective plate main body 3 in the direction of width.

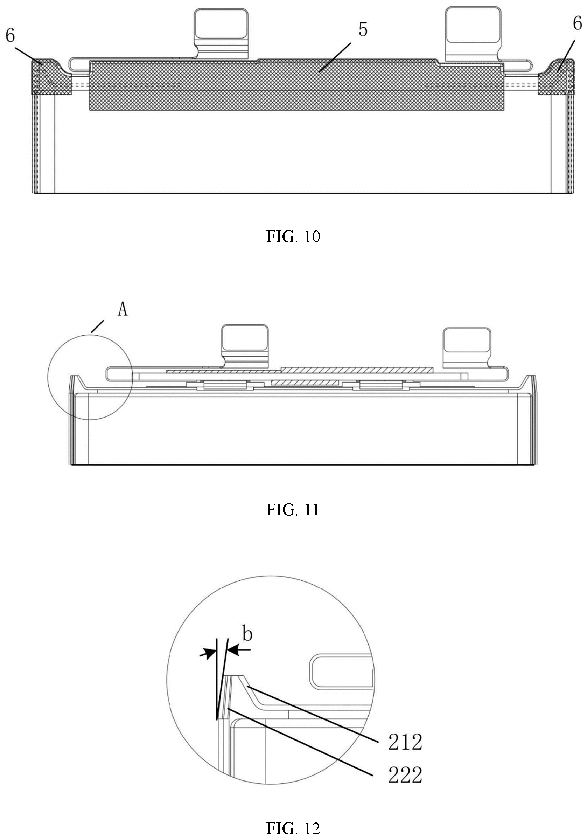

As shown in FIG. 10, the first side face of the protective plate main body 3 in the direction of width is a side face, exposed outside the sealant part 4, of the protective plate main body 3 in the direction of width. In order to insulate the surface of the protective plate main body 3 exposed outside the sealant part 4, the first insulation face of the first insulation member 5 may be attached to the surface of the first side face of the protective plate main body 3 in the direction of width, or the first insulation face of the first insulation member 5 may be attached to the surface of the first side face of the protective plate main body 3 in the direction of width and to the surface of the sealant part 4 on the same side, so that the first insulation face completely covers the surface of the protective plate main body 3 exposed outside the sealant part 4.

In this specific embodiment, the provision of the second insulation face can prevent scratches on the surface of the sealant part 4 on the same side as the upper surface of the protective plate main body 3, thereby effectively protecting the surface of the sealant part 4 on the same side as the upper surface of the protective plate main body 3. In addition, by providing the first insulation face, the surface of the first side face, exposed outside the sealant part 4, of the protective plate main body 3 in the direction of width can be effectively covered to avoid a potential safety risk caused by exposure of the first side face of the protective plate main body 3 in the direction of width outside the sealant part 4.

Based on the above, in order to avoid a potential safety risk of the tab 12 being exposed from the sealant part 4, the first insulation member 5 may further include a third insulation face connected to the second insulation face; and the third insulation face is located on a surface of the tab 12 exposed outside the sealant part 4, or the third insulation face is located on a surface of the tab 12 exposed outside the sealant part 4 and on a surface of the sealant part 4 on the same side. In this specific embodiment, the surface of the tab 12 exposed outside the sealant part 4 is located on the same side as the second side face of the protective plate main body 3 in the direction of width.

The second insulation face is connected to the first insulation face on one side and connected to the third insulation face on the other side. During actual processing, the provision of the second insulation face enables the first insulation face and the third insulation face to be connected into a whole, thereby preventing the first insulation face and the third insulation face from being arranged separately. In addition, the second insulation face is attached to an upper surface of the sealant part 4 on the same side as an upper surface of the protective plate main body 3, which can prevent scratches on the upper surface of the sealant part 4 on the same side as the upper surface of the protective plate main body 3, thereby effectively protecting the upper surface of the sealant part 4.

When the upper surface of the protective plate main body 3 is partially exposed outside the sealant part 4, the second insulation face may be attached only to the surface of the protective plate main body 3 exposed outside the sealant part 4, and the second insulation face may also be attached to the surface of the protective plate main body 3 exposed outside the sealant part 4 and to the surface of the sealant part 4 on the same side; and when the upper surface of the protective plate main body 3 is not exposed outside the sealant part 4, the second insulation face is attached to the surface of the sealant part 4 on the same side as the upper surface of the protective plate main body 3.

In this specific embodiment, the third insulation face is located on a surface of the tab 12 that is located on the same side as the second side face of the protective plate main body 3 in the direction of width. When the surface of the tab 12 exposed outside the sealant part 4 is located on the same side as the second side face of the protective plate main body 3 in the direction of width, the second side face of the protective plate main body 3 in the direction of width faces away from the first side face of the protective plate main body 3 in the direction of width. By providing the third insulation face, the surface of the tab 12 exposed outside the sealant part 4 can be effectively insulated to avoid a potential safety risk caused by exposure of the tab 12 outside the sealant part 4.

In this specific embodiment, the second side face of the protective plate main body 3 in the direction of width is a side facing away from the first side face of the protective plate main body 3 in the direction of width. The first side face of the protective plate main body 3 in the direction of width may be the surface of the side, in the same direction as the shallow recessed face of the housing 2, of the protective plate main body 3 in the direction of width.

In this specific embodiment, a width of the protective plate main body 3 may be made greater than a thickness of the cell 1 minus 0.4 mm, as shown in FIG. 7, where T denotes the thickness of the cell 1, and W denotes the width of the protective plate main body 3. When W is greater than or equal to T-0.4, at least one side of the protective plate main body 3 the direction of width is exposed outside the sealant part 4.

In order to avoid a short circuit caused by contact between the protective plate main body 3 and circuit boards or metal parts of other electric appliances, in the direction of width of the protective plate main body 3, the housing 2 is provided with a deep recessed face on one side, and the housing 2 is provided with a shallow recessed face on the other side; and a side of the protective plate main body 3 in the same direction as the deep recessed face of the housing 2 is completely located within the sealant part 4, and a side of the protective plate main body 3 in the same direction as the shallow recessed face of the housing 2 is partially exposed outside the sealant part 4.

As shown in FIG. 7, the deep recessed face of the cell 1 is shown on the left side, and the shallow recessed face of the cell 1 is shown on the right side.

The shallow recessed face is a surface of the battery facing a battery compartment of the electric appliance, and the deep recessed face is a surface of the battery facing away from the battery compartment toward the outside. As shown in FIG. 1, during the process of bending the top sealing edge 21 of the housing 2, the bending generally proceeds from the shallow recessed face toward the deep recessed face. Therefore, a side of the tab 12 close to the shallow recessed face is protected by the sealant or the top sealing edge 21, thereby minimizing the risk of a short circuit caused by board exposure on the shallow recessed face.

### Embodiment 3

As shown in FIG. 4, the protective plate main body 3 is provided with a notch 31, a position of the notch 31 corresponding to a connection position of the tab 12 on the protective plate main body 3, an opening of the notch 31 being located at an edge of a side of the protective plate main body 3 in the direction of width, and a direction of depth of the notch 31 extending in the direction of width of the protective plate main body 3; and the direction of depth of the notch 31 is a direction from the opening of the notch 31 toward a bottom face of the notch 31.

As shown in FIG. 6, in the direction of width of the protective plate main body 3, a side of the protective plate main body 3 having the notch is the same side as a side of the protective plate main body 3 exposed outside the sealant part 4.

In this specific embodiment, a direction of thickness of the protective plate main body 3 is the direction shown by the Z-axis in FIGS. 1 and 2.

Specific dimensions of the notch 31 may be set as follows: a width of the notch 31 is greater than or equal to 3.2 mm, and a depth of the notch 31 is greater than or equal to 0.6 mm. Specifically, during actual assembly, since the notch 31 is formed at a position corresponding to the tab 12, the width of the notch 31 may be made 1 mm greater than the width of the tab 12 on single sides to facilitate connection between the protective plate main body 3 and the tab 12.

In this specific embodiment, the number of the notches 31 provided on the same protective plate main body 3 is greater than or equal to 2. In addition, in order to ensure the welding reliability of the protective plate main body 3 and a flexible printed circuit board 7, the protective plate main body 3 has no notch 31 at two ends of the battery or in a welding region of the flexible printed circuit board 7.

In this specific embodiment, since the protective plate main body 3 is provided with the notch 31, the protective plate main body 3 may not be exposed from the sealant part 4 after potting.

During actual potting, densely arranged components, uneven structures or narrow channels on the protective plate main body 3 may hinder the flow of the sealant, resulting in incomplete filling. The provision of the notch 31 in the protective plate main body 3 can break the flow barrier, reduce the flow resistance of the sealant on surfaces of the two sides of the protective plate main body 3, and guide the sealant to flow to a difficult-to-fill region, thereby improving the flow uniformity and the filling completeness.

As shown in FIG. 3, the protective plate main body 3 is provided with a first placement face 32 and a second placement face 33 for the placement of electronics. The first placement face 32 is a surface of the protective plate main body 3 facing the housing 2, and the second placement face 33 is a surface of the protective plate main body 3 facing away from the housing 2.

During actual placement, the devices may be preferably arranged on the first placement face 32, and the devices may be arranged on the second placement face 33 when the area of the first placement face 32 does not meet the requirements.

In this specific embodiment, by providing the first placement face 32 and the second placement face 33, the electronics may be arranged on the front side and the back side of the protective plate main body 3, which, compared with single-sided placement, significantly reduces the area of plane required by the protective plate main body 3. Under the constraint of an extremely limited internal space of the battery, this design allows for the integration of more or more complex protection function circuits on the smaller protective plate main body 3, or directly reduces the dimensions of the protective plate main body 3 to make room for the cell 1, a heat dissipation structure or other components, which contributes to overall miniaturization, weight reduction and energy density improvement of the battery.

### Embodiment 4

When a second extension 222 is at least partially exposed outside the sealant part 4, the battery may be made to further include a second insulation member 6. The second insulation member 6 is located on a surface of the second extension 222 exposed outside the sealant part 4; or the second insulation member 6 is located on a surface of the second extension 222 exposed outside the sealant part 4 and on a surface of the sealant part 4 on the same side as the second extension 222.

During actual potting, a side edge of the cell 1 is at risk of being exposed due to the small amount of sealant at the side sealing edge 22 of the cell 1. An aluminum-plastic film cut of the side sealing edge 22 of the cell 1 is a vertical face of the side sealing edge 22, and the vertical face is lower than the cell 1 and is wrapped by injection molding with sealant for insulation in a direction of thickness, so that the aluminum-plastic film cut of the side sealing edge 22 of the cell 1 is generally not exposed. The amount of sealant is small at the positions where the first extension 212 and the second extension 222 are located, making it prone to exposure. In order to prevent exposure of the second extension 222 from the sealant part 4, in this specific embodiment, the second insulation member 6 is provided, and the second insulation member 6 is attached to the surface of the second extension 222 exposed outside the sealant part 4 and to the surface of the sealant part 4 on the same side as the second extension 222, thereby preventing exposure of the second extension 222 from the sealant part 4.

The second insulation member 6 may be provided as an insulation sticker or other thin sheet-like insulation structures that meet the requirements, depending on actual situations.

When the first extension 212 is at least partially exposed outside the sealant part 4 and the second extension 222 is at least partially exposed outside the sealant part 4, the second insulation member 6 may be made to include a fifth insulation face and a sixth insulation face. The fifth insulation face is located on the surface of the second extension 222 exposed outside the sealant part 4, and the sixth insulation face is located on the surface of the first extension 212 exposed outside the sealant part 4; or the fifth insulation face is located on the surface of the second extension 222 exposed outside the sealant part 4 and on the surface of the sealant part 4 on the same side; and the sixth insulation face being located on the surface of the first extension 212 exposed outside the sealant part 4 and on the surface of the sealant part 4 on the same side.

The fifth insulation face and the sixth insulation face may be of a separate structure or an integrated structure, depending on actual situations.

As shown in FIG. 10, the fifth insulation face and the sixth insulation face of the second insulation member 6 may be dimensioned according to the shapes and the dimensions of the first extension 212 and the second extension 222, so that the second insulation member 6 completely covers the first extension 212 and the second extension 222.

It is also possible to make the dimension of the fifth insulation face of the second insulation member 6 larger than that of the second extension 222 and the dimension of the sixth insulation face larger than that of the first extension 212, so that part of the fifth insulation face and the sixth insulation face are attached to the surface of the sealant part 4, thereby enabling edges of the first extension 212 and the second extension 222 to be effectively covered by the second insulation member 6.

The second insulation member 6 in this specific embodiment is separated from the first insulation member 5 in the above embodiment, thereby avoiding the difficulty of applying sealant due to the presence of the flexible printed circuit board 7 between the first insulation member and the second insulation member.

In this specific embodiment, the provision of the second insulation member 6 can prevent direct exposure of the first extension 212 and the second extension 222, and achieve insulation of the surfaces of the first extension 212 and the second extension 222 exposed outside the sealant part 4, so that potential safety risks caused by exposure of the first extension 212 and the second extension 222 can be effectively eliminated. In addition, in this specific embodiment, the first extension 212 and the second extension 222 are exposed from the sealant part 4, which can improve the heat dissipation capability of the battery.

### Embodiment 5

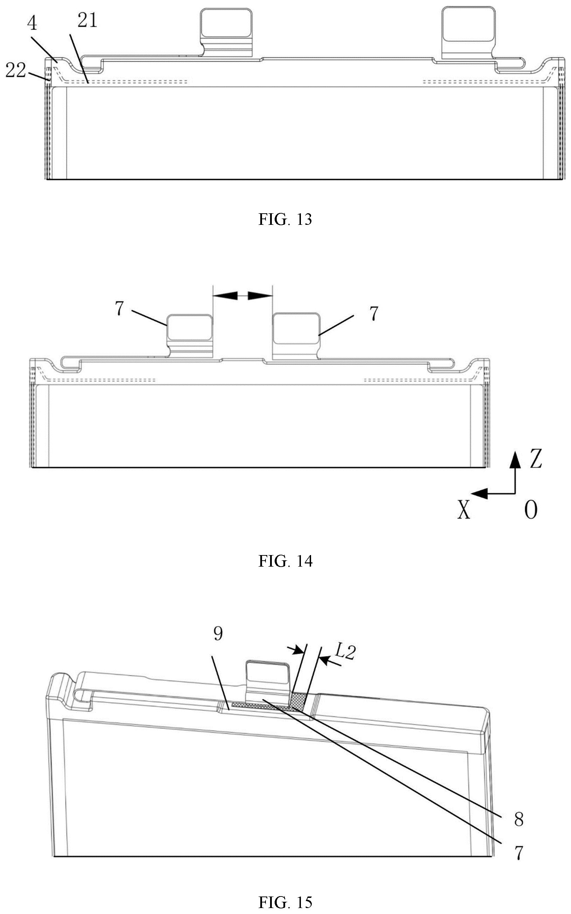

As shown in FIGS. 11 and 12, an extension direction of the second extension 222 may be made to have both a component in a direction of height of the cell 1 and a component in a length direction of the top end face and toward the first main body portion 211, and the second extension 222 is made to be inclined toward the top end face of the cell 1 while extending in the direction of height of the cell 1. After potting, as shown in FIG. 13, since the second extension 222 is inclined toward the top end face of the cell 1 while extending in the direction of height of the cell 1, an outer side of the second extension 222 may have more space for potting, which is beneficial to increasing the amount of sealant on the outer side of the second extension 222 and preventing exposure of the second extension 222.

As shown in FIG. 12, an angle b is an angle between the extension direction of the second extension 222 and the direction of height of the cell 1. Specifically, the angle b may be set to 2° to 18°. The second extension 222 is completely located within the sealant part 4.

### Embodiment 6

As shown in FIG. 14, in this specific embodiment, the connection terminal to which the protective plate main body 3 is connected includes two flexible printed circuit boards 7, and a spacing L1 between two adjacent flexible printed circuit boards 7 is greater than or equal to 1.2 mm, so as to avoid interference during test assembly. In this specific embodiment, the spacing L1 between the two flexible printed circuit boards 7 is a spacing between the two flexible printed circuit boards 7 in a direction shown by an X-axis in FIGS. 1 and 2.

In some other embodiments, the connection terminal includes at least one flexible printed circuit board 7, such as one flexible printed circuit board 7, two flexible printed circuit boards 7, or three flexible printed circuit boards 7. As shown in FIG. 15, a surface of the sealant part 4 facing away from the cell 1 is provided with a groove 9 and a double-sided adhesive foam tape 8 located within the groove 9. It can be understood that the surface of the sealant part 4 facing away from the cell 1 is provided with the groove 9, the second insulation face is attached to the surface, and since the attachment of the second insulation face may not lead to disappearance of the groove 9, the double-sided adhesive foam tape 8 is still located within the groove 9. Therefore, the double-sided adhesive foam tape 8 is bonded to the surface of the second insulation face away from the protective plate main body 3 on one side, and bonded to the flexible printed circuit board 7 on the other side, so that the flexible printed circuit board 7 is fixed, which prevents the flexible printed circuit board 7 from shaking. Moreover, the presence of the groove 9 can accommodate the thicknesses of the flexible printed circuit board 7 and the double-sided adhesive foam tape 8 without increasing the overall length of the battery. In addition, since the thicknesses of the flexible printed circuit board 7 and the double-sided adhesive foam tape 8 are accommodated, when the battery is installed in the battery compartment of the electric appliance, the flexible printed circuit board 7 may not be damaged by pressure of the battery compartment and the sealant part 4 caused by the surface of the sealant part 4 facing away from the cell 1 being flat.

The thickness of the double-sided adhesive foam tape 8 is 0.1 mm less than the depth of the groove 9, avoiding a limited accommodating effect of the flexible printed circuit board 7 caused by the double-sided adhesive foam tape 8 being too thick.

In the direction of thickness of the cell 1, two side edges of the double-sided adhesive foam tape 8 are recessed inward by 0.1 mm to 2.0 mm relative to an edge of the sealant part 4. This range can not only ensure bonding and fixing of the flexible printed circuit board 7 by means of the double-sided adhesive foam tape 8, but also prevent part of the area of the double-sided adhesive foam tape 8 being not bonded to the flexible printed circuit board 7 caused by the double-sided adhesive foam tape being too wide. As a result, during installation of the battery, automatic assembly of the battery is affected caused by the part to which the flexible printed circuit board 7 is not bonded being sticky. In the direction of width of the cell 1, a side edge of the double-sided adhesive foam tape 8 away from the flexible printed circuit board 7 protrudes away from the flexible printed circuit board 7 by a dimension L2 relative to an edge of the flexible printed circuit board 7. The value of L2 ranges from 0.5 mm to 5 mm. The setting of the dimension L2 can reduce the positional tolerance of the flexible printed circuit board 7 and improve the positional accuracy of the flexible printed circuit board 7, thereby improving the convenience of connector alignment and engagement during installation of the battery. In this specific embodiment, the direction of thickness of the cell 1 is shown by the Y-axis in FIG. 7. In this specific embodiment, the direction of width of the cell 1 is shown by the X-axis in FIGS. 1 and 2.

In this specific embodiment, the double-sided adhesive foam tape 8 may be a low-viscosity double-sided adhesive tape with adhesive strength of 3N-7N/25 mm.

In addition to the battery described above, the present invention further provides an electronic device including a battery disclosed in the above embodiments. For structures of other parts of the electronic device, reference is made to the prior art, which will not be repeated herein.

All embodiments in the description are described in a progressive manner. Each embodiment focuses on differences from other embodiments. For the same or similar parts between various embodiments, reference may be made to each other. Any combination of all the embodiments provided by the present invention shall fall within the scope of protection of the present invention and thus will not be repeated herein.

The battery and the electronic device of the present invention are described in detail above. The principle and implementations of the present invention are described herein by using specific examples, the above descriptions of the embodiments are merely intended to help understand the method and core concept of the present invention. It should be noted that for those of ordinary skills in the art, several improvements and modifications may also be made to the present invention without departing from the principle of the present invention, and these improvements and modifications also fall within the scope of protection of the present invention.

## Claims

1. A battery, comprising:
a cell (1), the cell (1) comprising a housing (2), an electrode assembly (11) located within the housing (2), and a tab (12) electrically connected to the electrode assembly (11), wherein the housing (2) has a top sealing edge (21) and a side sealing edge (22) formed at an edge of the electrode assembly (11); the tab (12) extends out of the cell (1) from the top sealing edge (21), the top sealing edge (21) comprises a first main body portion (211) and a first extension (212), and the side sealing edge (22) comprises a second main body portion (221) and a second extension (222); the first main body portion (211) is bent toward a top end face of the cell (1), and the second main body portion (221) is bent toward a side surface of the cell (1); and in a direction of height of the electrode assembly (11), the second extension (222) extends out of a top end face of the electrode assembly (11) and extends in the direction of height of the electrode assembly (11), and the first extension (212) connects the second extension (222) and the first main body portion (211);
a protective plate comprising a protective plate main body (3) and a connection terminal electrically connected to the protective plate main body (3), the protective plate main body (3) being arranged on a side of the first main body portion (211) facing away from the top end face and electrically connected to the tab (12), the protective plate main body (3) being parallel to the top end face of the cell (1), and the top end face of the cell (1) being an end face of the cell (1) in a direction of height;
a sealant part (4) located at a periphery of the protective plate main body (3), at least one side of the protective plate main body (3) in a direction of width having an exposed portion exposed outside the sealant part (4); and
a first insulation member (5) covering at least the exposed portion.

2. The battery according to claim 1, wherein in the direction of width of the protective plate main body (3), the housing (2) is provided with a deep recessed face on one side, and the housing (2) is provided with a shallow recessed face on the other side; a side of the protective plate main body (3) in the same direction as the deep recessed face of the housing (2) is completely located within the sealant part (4), and a side of the protective plate main body (3) in the same direction as the shallow recessed face of the housing (2) is partially exposed outside the sealant part (4); and
the first main body portion (211) is bent from the shallow recessed face toward the deep recessed face.

3. The battery according to claim 2, wherein the first insulation member (5) comprises a first insulation face, the first insulation face being located on a surface of the protective plate main body (3) exposed outside the sealant part (4), or the first insulation face being located on a surface of the protective plate main body (3) exposed outside the sealant part (4) and on a surface of the sealant part (4) on the same side;
and/or the first insulation member (5) comprises a second insulation face, an upper surface of the protective plate main body (3) being completely located within the sealant part (4), and the second insulation face being located on a surface of the sealant part (4) on the same side as the upper surface of the protective plate main body (3);
and/or the first insulation member (5) comprises a third insulation face, a surface of the tab (12) exposed outside the sealant part (4) being located on the same side as a second side face of the protective plate main body (3) in the direction of width, and the third insulation face being located on a surface of the tab (12) exposed outside the sealant part (4), or the third insulation face being located on the surface of the tab (12) exposed outside the sealant part (4) and on a surface of the sealant part (4) on the same side.

4. The battery according to claim 1, wherein the protective plate main body (3) is provided with a notch (31), a position of the notch (31) corresponding to a connection position of the tab (12) on the protective plate main body (3), an opening of the notch (31) being located at an edge of a side of the protective plate main body (3) in the direction of width, and a direction of depth of the notch (31) extending in the direction of width of the protective plate main body (3); and the direction of depth of the notch (31) is a direction from the opening of the notch (31) toward a bottom face of the notch (31).

5. The battery according to claim 4, wherein in the direction of width of the protective plate main body (3), a side of the protective plate main body (3) having the notch is the same side as a side of the protective plate main body (3) exposed outside the sealant part (4).

6. The battery according to any one of claims 1 to 5, wherein the second extension (222) is at least partially exposed outside the sealant part (4); and
the battery further comprises a second insulation member (6), the second insulation member (6) being located on a surface of the second extension (222) exposed outside the sealant part (4); or the second insulation member (6) being located on a surface of the second extension (222) exposed outside the sealant part (4) and on a surface of the sealant part (4) on the same side as the second extension (222).

7. The battery according to claim 6, wherein the first extension (212) is at least partially exposed outside the sealant part (4); and
the second insulation member (6) comprises a fifth insulation face and a sixth insulation face;
wherein the fifth insulation face is located on the surface of the second extension (222) exposed outside the sealant part (4), and the sixth insulation face is located on the surface of the first extension (212) exposed outside the sealant part (4); or the fifth insulation face is located on the surface of the second extension (222) exposed outside the sealant part (4) and on the surface of the sealant part (4) on the same side; and the sixth insulation face is located on the surface of the first extension (212) exposed outside the sealant part (4) and on the surface of the sealant part (4) on the same side.

8. The battery according to any one of claims 1 to 5, wherein an angle between an extension direction of the second extension (222) and a direction of height of the cell (1) is 2° to 18°; and the second extension (222) is completely located within the sealant part (4).

9. The battery according to claim 3, wherein the connection terminal comprises two flexible printed circuit boards (7), and a spacing between two adjacent flexible printed circuit boards (7) is greater than or equal to 1.2 mm;
or the connection terminal comprises at least one flexible printed circuit board (7), and a surface of the sealant part (4) facing away from the cell (1) is provided with a groove (9) and a double-sided adhesive foam tape (8) located within the groove (9), one side of the double-sided adhesive foam tape (8) being bonded to a surface of the second insulation face away from the protective plate main body (3), and the other side of the double-sided adhesive foam tape (8) being bonded to the flexible printed circuit board (7).

10. The battery according to claim 9, wherein a thickness of the double-sided adhesive foam tape (8) is less than a depth of the groove (9) minus 0.1 mm; in a direction of thickness of the cell (1), two side edges of the double-sided adhesive foam tape (8) are recessed inward by 0.1 mm to 2.0 mm relative to an edge of the sealant part (4); and in a direction of width of the cell (1), a side edge of the double-sided adhesive foam tape (8) away from the flexible printed circuit board (7) protrudes away from the flexible printed circuit board (7) by 0.5 mm to 5 mm relative to an edge of the flexible printed circuit board (7).

11. The battery according to claim 1, wherein the protective plate main body (3) comprises a first placement face (32) and a second placement face (33) arranged opposite to each other, and the first placement face (32) faces toward the housing (2), and the second placement face (33) faces away from the housing (2).

12. The battery according to claim 1, wherein a width of the protective plate main body (3) is greater than or equal to a difference between a thickness of the cell (1) and 0.4 mm.

13. The battery according to claim 4, wherein a width of the notch (31) is greater than or equal to 3.2 mm, a depth of the notch (31) is greater than or equal to 0.6 mm; and the width of the notch (31) is 1 mm greater than a width of the tab (12) on single side.

14. An electronic device, comprising a battery according to any one of claims 1 to 13.
